Europäisches Patentamt

European Patent Office

Office européen des brevets

(11) Numéro de publication: **0 018 867**
**A2**

## (12) DEMANDE DE BREVET EUROPEEN

(21) Numéro de dépôt: **80400460.4**

(22) Date de dépôt: **04.04.80**

(51) Int. Cl.³: **H 02 H 3/14**

(30) Priorité: **09.04.79 FR 7908904**

(43) Date de publication de la demande:
**12.11.80 Bulletin 80/23**

(84) Etats Contractants Désignés:
**AT BE CH DE GB IT LI LU NL SE**

(71) Demandeur: **Osmond, Max Roger Victor**
**22, boulevard Jules Guesde**
**F-94000 Champigny-sur-Marne(FR)**

(72) Inventeur: **Duval, Claude, Ing.**
**18, rue de Sèvres**
**F-92100 Boulogne-sur-Seine(FR)**

(74) Mandataire: **Corre, Jacques Denis Paul et al,**
**Cabinet Regimbeau 26, Avenue Kléber**
**F-75116 Paris(FR)**

(54) Alimentation électrique de sécurité à thyristor.

(57) L'alimentation électrique de sécurité comprend un dispositif disjoncteur dont l'enroulement 20 commande un circuit magnétique 21 susceptible de déverrouiller des contacts 211 et 212 normalement fermés, mais normalement sollicités à l'ouverture.

Un thyristor 16 est monté entre la borne de masse locale 5 d'un appareil d'utilisation et la ligne de terre, par son circuit gâchette-cathode, en série sur une résistance 14. Une diode 12 est montée en inverse entre la gâchette et la cathode du thyristor, tandis qu'un élément non linéaire 19 du type varistor à oxyde métallique vient se placer entre la borne 5 et la ligne de terre pour éviter des surtensions aux bornes du thyristor 16 et assurer le bon fonctionnement de celui-ci.

Applications domestiques notamment.

EP 0 018 867 A2

./...

POSTE DE

TRANSFORMATION

SECTEUR

PH  1

N  2

T  6

211

212

20

21

16  14

18  12

19

3  9

4  APPAREIL

D'

UTILISATION

5

Masse locale

## Alimentation électrique de sécurité à thyristor entre masse et terre

La présente invention concerne les alimentations électriques de sécurité. Celles-ci comprennent d'une manière générale un dispositif disjoncteur, monté sur au moins une ligne de phase susceptible d'alimenter un appareil d'utilisation, muni par ailleurs d'une borne de masse locale. Ce dispositif disjoncteur est souvent d'un type comportant un relais d'ouverture de contacts, susceptible d'interrompre non seulement la ou les lignes de phase, mais aussi la plupart du temps la ligne de neutre alimentant l'appareil d'utilisation.

En règle générale, la commande du disjoncteur s'effectue à partir d'un transformateur différentiel, sur lequel viennent s'enrouler la ou les lignes de phase ainsi que la ligne de neutre. Tout courant de défaut crée alors une tension au secondaire du transformateur différentiel et cette tension est utilisé pour la commande du disjoncteur.

L'inconvénient de ces commandes par transformateurs différentiels est qu'il est difficile de donner à ces derniers une sensibilité suffisante, en particulier si l'on désire éviter l'électrocution des utilisateurs. Par ailleurs, pour les applications grand public, il est nécessaire que le dispositif de sécurité soit d'une grande simplicité, et susceptible d'une réalisation économique. La présente invention vient permettre de concilier ces deux impératifs.

Très généralement, le dispositif proposé comporte un interrupteur commandé, monté en série avec l'enroulement de disjoncteur dans le circuit d'alimentation de celui-ci ; et le circuit de commande de l'interrupteur commandé est monté en série entre la borne de masse locale et un point au potentiel zéro de la terre générale, avantageusement pris sur la ligne de terre venant du poste de transformation du secteur.

Selon une autre caractéristique importante de l'invention, l'interrupteur commandé est un thyristor, dont la gâchette est reliée par une résistance à la borne de masse locale, tandis que sa cathode est relié au point au potentiel zéro, et son anode à l'enroulement du relais ou électro-aimant de disjoncteur.

Dans un mode de réalisation particulier, une diode est montée en inverse entre la cathode et la gâchette du thyristor. Avec certains thyristors, en particulier ceux qui sont très sensibles, il est souhaitable de monter une autre résistance en parallèle entre la cathode et la gâchette du thyristor.

Très avantageusement, le dispositif proposé comporte en outre un élément à seuil de conduction, branché entre l'extrémité de la première résistance, côté borne de masse locale, et la cathode du thyristor. De préférence, l'élément à seuil de conduction est une résistance non linéaire, telle qu'un varistor à oxyde métallique.

En pratique, le pôle actif d'alimentation de l'électro-aimant est pris, sur la ligne de phase, en aval du contact commandé par le disjoncteur. Comme précédemment indiqué, il est généralement souhaitable que le disjoncteur comporte également un contact pour l'ouverture de la ligne de neutre.

Selon une autre caractéristique de l'invention, le disjoncteur est du type à mémoire d'ouverture, ne nécessitant donc qu'une brève impulsion de courant de la part du thyristor pour l'excitation de l'électro-aimant. Le dispositif proposé se complète alors avantageusement par des moyens de réarmement du disjoncteur, de type mécanique de préférence.

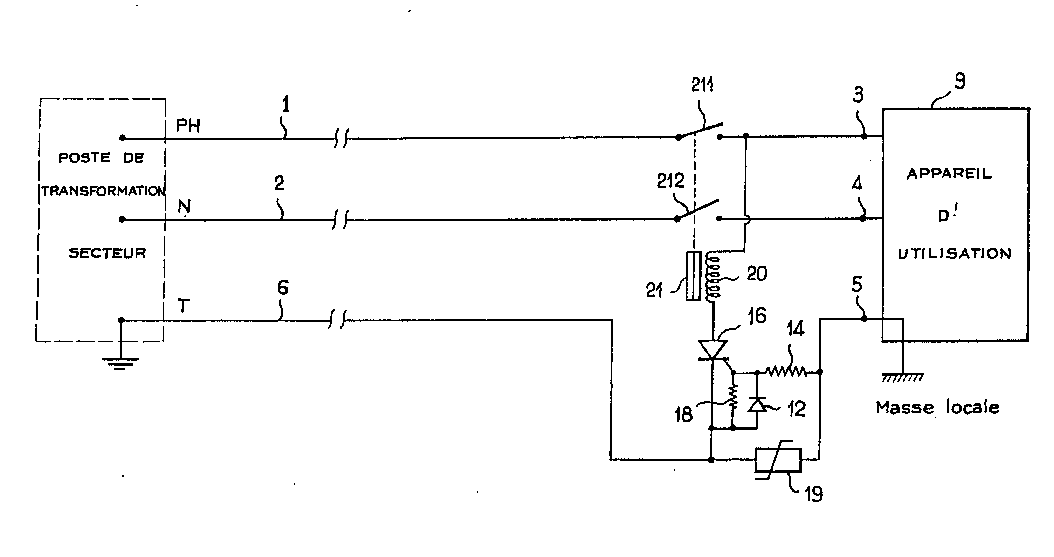

D'autres caractéristiques et avantages de l'invention apparaîtront à la lecture de la description détaillée qui va suivre, faite en référence au dessin annexé, donné pour illustrer à titre non limitatif un mode de réalisation préférentiel de l'invention, et dont la figure unique illustre le schéma de principe d'une alimentation électrique de sécurité selon la présente invention.

Sur cette figure, on reconnaît à gauche un poste de transformation secteur, d'où partent au moins une ligne de phase (PH), référencée 1, une ligne de neutre (N) référencée 2, ainsi qu'une ligne de terre (T) référencée 6. Ces lignes traversent le réseau de distribution pour arriver chez l'usager, où elles aboutissent finalement à un appareil d'utilisation 9. S'agissant d'un appareil monophasé, celui-ci comporte une borne 3 reliée à la ligne de phase, une borne 4 reliée à la ligne de neutre, ainsi qu'une borne de masse locale 5.

Un relais de disjoncteur 20 est susceptible de commander par un circuit magnétique 21 deux con-

4

tacts 211 et 212 respectivement placés en série sur la ligne de phase et sur la ligne de neutre.

Le demandeur a observé que les appareils d'utilisation domestiques, en général du type gros électroménager, ne présentent pas de par leur utilisation physique une très bonne mise à la terre de leur masse locale. Il en résulte une certaine résistance électrique qui existe entre la borne de masse locale 5 et la terre générale, considérée classiquement comme étant au potentiel zéro. Cette observation est utilisée dans le dispositif selon l'invention.

On voit sur la figure unique que l'une des bornes de l'enroulement de relais 20 est reliée à la ligne de phase, en aval du contact 211, tandis que son autre borne est reliée à l'anode d'un thyristor 16, dont la cathode est reliée directement à la ligne de terre 6. La gâchette du thyristor est reliée d'une part par une résistance 14 à la borne de masse locale de l'appareil d'utilisation, et d'autre part par une diode 12 montée en inverse à la cathode du même thyristor.

Par ailleurs, un élément à conduction non linéaire, tel qu'un varistor à oxyde métallique, référencé 19, est monté entre l'extrémité libre de la résistance 14 côté borne de masse locale et la cathode du thyristor 16. Cet élément non linéaire a pour rôle de limiter la tension susceptible d'apparaître dans l'un ou l'autre sens entre la gâchette et la cathode du thyristor, afin d'éviter l'endommagement de celui-ci.

Enfin, avec certains types de thyristors, en particulier les thyristors très sensibles du type planar, il s'est avéré souhaitable d'insérer une résistance 18 entre la gâchette du thyristor et sa cathode, afin de limiter les déclenchements intempes-

tifs dus aux variations $\frac{dV}{dt}$ (différentielle de tension en fonction du temps) qui sont susceptibles d'apparaître entre ces deux bornes.

Le fonctionnement du dispositif proposé est le suivant :

- dans les conditions normales, il y a un très bon isolement entre la borne de phase et la carcasse de l'appareil d'utilisation 9, aucune tension n'étant donc développée au niveau de la borne de masse locale 5.

- si au contraire il se produit un défaut entre la borne de phase et la carcasse de l'appareil à l'intérieur de celui-ci, ou bien si un usager vient à toucher la borne de phase tout en étant lui-même en contact physique avec la masse locale, constituée par exemple par toute partie accessible des lieux d'habitation, il s'écoule alors un courant entre la ligne de phase 1 et la masse locale. Compte tenu du fait que la résistance entre la masse locale et la terre n'est pas nulle, il apparaît alors une différence de potentiel entre la borne 5 et la ligne de terre 6. Cette différence de potentiel vient à travers la résistance 14 déclencher par ses alternances positives la gâchette du thyristor 16. Devenant immédiatement conducteur, celui-ci déclenche le relais 20, d'où l'ouverture des contacts 211 et 212 et la disparition immédiate du défaut.

On voit ainsi que le montage proposé est susceptible d'assurer une excellente protection aussi bien contre les défauts accidentels dans un appareil que contre l'électrocution des usagers, en particulier dans des installations domestiques, où il demeure pratiquement toujours une résistance faible, mais non rigoureusement nulle, entre les dispositifs de masse (dénommés classiquement "terre" d'une manière impropre) et le potentiel zéro de la terre générale.

Dans un mode de réalisation particulier de la présente invention, le dispositif disjoncteur comporte deux contacts normalement sollicités à l'ouverture, mais maintenus fermés par un dispositif d'enclenchement, équipé d'un verrou que vient faire sauter le circuit magnétique 21 lorsque l'enroulement 20 est excité. Le réarmement est manuel.

. Par ailleurs, les éléments du montage peuvent être les suivants :

- Thyristor modèle C106D de GENERAL ELECTRIC
- Résistance 14 220 ohms,
- Résistance 18 470 ohms,
- Diode 12 du type 1 ampère,
- Varistor 19 du type V 18Z A 3 de GENERAL ELECTRIC.

Bien entendu, la présente invention n'est pas limitée par le mode de réalisation décrit et s'étend à toute variante conforme à son esprit.

R E V E N D I C A T I O N S

1. Alimentation électrique de sécurité, comprenant un dispositif disjoncteur monté sur au moins une ligne de phase susceptible d'alimenter un appareil d'utilisation, muni par ailleurs d'une borne de masse locale, ce dispositif disjoncteur comportant un relais d'ouverture de contact, caractérisée par le fait qu'elle comporte, en combinaison, un interrupteur commandé, monté en série avec l'enroulement de relais dans le circuit d'alimentation de celui-ci, et dont le circuit de commande est monté en série entre la borne de masse locale et un point au potentiel zéro de la terre générale.

2. Alimentation électrique de sécurité selon la revendication 1, caractérisée par le fait que le point au potentiel zéro est pris sur une ligne de terre venant du poste de transformation du secteur.

3. Alimentation électrique de sécurité selon l'une des revendications 1 et 2, caractérisée par le fait que l'interrupteur commandé est un thyristor, dont la gâchette est reliée par une résistance à la borne de masse locale, tandis que sa cathode est reliée au point au potentiel zéro, et son anode à l'enroulement du relais.

4. Alimentation électrique de sécurité selon la revendication 3, caractérisée par le fait qu'elle comporte une diode montée en inverse entre la cathode et la gâchette du thyristor.

5. Alimentation électrique de sécurité selon l'une des revendications 3 et 4, caractérisée par le fait qu'elle comporte une autre résistance montée entre la cathode et la gâchette du thyristor.

6. Alimentation électrique de sécurité selon l'une des revendications 3 à 5, caractérisée par le fait qu'elle comporte un élément à seuil de conduction branché entre l'extrémité de la première résistance, côté borne de masse locale, et la cathode du thyristor.

7. Alimentation électrique de sécurité selon la revendication 6, caractérisée par le fait que l'élément à seuil de conduction est une résistance non linéaire, telle qu'un varistor à oxyde métallique.

8. Alimentation électrique de sécurité selon l'une des revendications 1 à 7, caractérisée par le fait que le pôle actif d'alimentation de l'électro-aimant est pris, sur la ligne de phase, en aval du contact commandé par le disjoncteur.

9. Alimentation électrique de sécurité selon l'une des revendications 1 à 8, caractérisée par le fait que le disjoncteur comporte également un contact pour l'ouverture de la ligne de neutre.

10. Alimentation électrique de sécurité selon l'une des revendications 1 à 9, caractérisée par le fait qu'elle comporte des moyens de réarmement du disjoncteur, et que celui-ci est du type à mémoire d'ouverture.

1/1

APPAREIL D' UTILISATION

9

Masse locale

3  4  5

14  12  19

20  16  18

211  212  21

1  2  6

PH  N  T

POSTE DE TRANSFORMATION SECTEUR